# EUROPÄISCHE PATENTSCHRIFT

(11) **EP 1 117 023 B1**
(45) Veröffentlichungstag und Bekanntmachung des Hinweises auf die Patenterteilung: **26.04.2006**
(21) Anmeldenummer: 00128688.9
(22) Anmeldetag: 28.12.2000
(51) Int. Cl.: G05B 23/02, G05B 13/02

(54) **Vorrichtung zur Diagnose von beim Betrieb eines Kraftfahrzeugs auftretenden Fehlern**
Device for fault diagnosis during motor vehicle operation
Dispositif de diagnostic de fautes pendant le fonctionnement d'un véhicule automobile

(30) Priorität: 12.01.2000 DE 10000911
(43) Veröffentlichungstag der Anmeldung: 18.07.2001
(73) Patentinhaber: ROBERT BOSCH GMBH, 70442 Stuttgart (DE)
(72) Erfinder: Schmedding,Rainer, 31135 Hildesheim (DE); Baierl,Wolfgang, 73630 Remshalden (DE)

(56) Entgegenhaltungen:
- US-A- 4 989 146
- US-A- 5 041 976
- US-A- 5 210 704
- US-A- 5 712 782
- US-A- 5 835 871

## Beschreibung

### Stand der Technik

Die Erfindung betrifft eine Vorrichtung zur Diagnose von beim Betrieb eines Kraftfahrzeugs auftretenden Fehlern, mit mindestens einer Schnittstelle zum Empfangen von Zustandsdaten von unterschiedlichen Fahrzeugkomponenten, mit Auswertemitteln zum Erkennen von Fehlern anhand der Zustandsdaten und zum Abrufen entsprechender Fehlermeldungen von einer Informationsbasis und mit einer Ausgabeeinheit zur Wiedergabe der Fehlermeldungen.

Aus der Praxis sind bereits sogenannte On-Board-Diagnosesysteme bekannt, die Fehlfunktionen beim Betrieb des Kraftfahrzeugs durch Auswertung bestimmter Meßgrößen erkennen und in Form von entsprechenden Fehlermeldungen zur Anzeige bringen. Diese Diagnosesysteme basieren auf der Überwachung bestimmter physikalischer Größen, wie z. B. der Motordrehzahl, der Betriebstemperatur, etc., die vom Betriebszustand einzelner Fahrzeugkomponenten abhängen und mit Hilfe einer entsprechenden Sensorik erfaßt werden. Weichen die aktuell erfaßten Zustandsdaten von den bei Normalbetrieb zu erwartenden Zustandsdaten ab, so kennt ein derartiges Diagnosesystem, daß ein Fehler aufgetreten ist. Das Diagnosesystem versucht dann, die erfaßten Zustandsdaten einem bestimmten Fehler zuzuordnen, der vorab durch eine bestimmt Meßwertkonstellation definiert worden ist. Dementsprechend kann ein Fehler nur dann identifiziert werden, wenn Übereinstimmung zwischen den erfaßten Zustandsdaten und einer für eine bestimmte Fehlerart abgespeicherten Meßwertkonstellation besteht. Ist eine derartig eindeutige Zuordnung nicht möglich, so können die bekannten Diagnosesysteme zwar erkennen, daß ein Fehler aufgetreten ist, aber nicht um welche Art von Fehler es sich handelt. Dementsprechend können dem Fahrzeugbenutzer in diesen Fällen auch keine einfach verständlichen Informationen über den Betriebszustand des Kraftfahrzeugs bzw. der betroffenen Kraftfahrzeugkomponenten gegeben werden. Einer weiterführenden Diagnose, beispielsweise einer Ferndiagnose durch die Werkstatt, müssen dann immer sämtliche erfaßten Zustandsdaten zugrundegelegt werden, was in der Regel mit der Übertragung von größeren Datenmengen verbunden ist.

Der vorliegenden Erfindung liegt nun die Aufgabe zugrunde, eine Vorrichtung zur Diagnose von beim Betrieb eines Kraftfahrzeugs auftretenden Fehlern anzugeben, die dem Fahrzeugbenutzer umfangreichere Diagnosemöglichkeiten On-Board zur Verfügung stellt und ihn in jedem Falle mit einfach verständlichen Informationen zum Betriebszustand des Kraftfahrzeugs bzw. einzelner Kraftfahrzeugkomponenten versorgt.

Die US 5 041 976 zeigt ein Diagnosesystem, bei welchem eine Mustererkennung samt Datenbank ausgewertet wird. Abhängig von den erfassten Betriebsbedingungen des Motors werden Parametervektoren X ermittelt. Diese werden mittels der Mustererkennung in Codes C umgesetzt, die im Rahmen eines Lernprozesses den Vektoren zugeordnet wurden. Diese Codes bestimmen die den Parametervektoren zugeordneten Fehlerzustände.

In der US 5 210 704 wird zur Fehlererkennung ein Expertensystem eingesetzt, wobei eine Warnzeit ausgegeben wird, die die Zeit anzeigt, bevor ein Ausfall des entsprechenden Systems zu befürchten ist.

### Vorteile der Erfindung

Die erfindungsgemäße Vorrichtung löst die voranstehende Aufgabe durch die Merkmale des Patentanspruchs 1. Danach ist die eingangs genannte Vorrichtung so ausgestaltet, daß die Auswertemittel ein Expertensystem umfassen, wobei das Expertensystem jeder konkreten Konstellation von Zustandsdaten mindestens eine Fehlerart mit der entsprechenden Fehlerwahrscheinlichkeit als Fehlermeldung zuordnet, und daß das Expertensystem an die Elektronik des Kraftfahrzeugs angeschlossen ist, so daß die Auswertung der Zustandsdaten im Kraftfahrzeug erfolgt.

Erfindungsgemäß ist erkannt worden, daß die steigende Funktionalität der einzelnen Kraftfahrzeugkomponenten und insbesondere auch der Elektronik des Kraftfahrzeugs in einer Vielzahl mehr oder weniger kritischer Systemzustände resultiert. Aufgrund der Komplexität des Gesamtsystems können der oder die Verursacher für derartige kritische Systemzustände nicht in jedem Falle eindeutig ausgemacht werden, d. h. in der Regel kommen für beim Betrieb eines Kraftfahrzeugs auftretende Fehlfunktionen mehrere Fehlerquellen in Frage. Diesem Umstand werden Diagnosesysteme, die jedem Fehler bzw. jeder Fehlerart einen starr definierten Systemzustand, d. h. eine ganz bestimmte Meßwertkonstellation, zuordnen, nicht gerecht. Erfindungsgemäß wird daher die Verwendung eines Expertensystems zur Auswertung der erfaßten Zustandsdaten vorgeschlagen. Das Expertensystem, das im Rahmen der erfindungsgemäßen Vorrichtung zum Einsatz kommen soll, gewährleistet, daß immer wenn das Auftreten eines Fehlers erkannt worden ist, auch eine Fehlermeldung angezeigt wird. Da eine eindeutige Ursache für einen aufgetretenen Fehler oftmals nicht auszumachen ist, ein Fehler also nicht in jedem Fall eindeutig identifiziert werden kann, liefert das Expertensystem gleichzeitig auch eine Wertung der Fehlerangabe. Zusammen mit jeder Fehlerangabe wird nämlich immer auch die Wahrscheinlichkeit angegeben, daß die angezeigte Fehlerart bei Vorliegen der erfaßten Zustandsdatenkonstellation tatsächlich auftritt. Auf diese Art und Weise wird der Fahrzeugbenutzer mit detaillierten aber dennoch einfach verständlichen Informationen über den Betriebszustand seines Fahrzeugs versorgt. Die Vorverarbeitung der sogenannten Rohdaten, nämlich der erfaßten Zustandsdaten, gewährleistet aber nicht nur die Ausgabe von Fehlermeldungen, sondern stellt eine Umformatierung in das Datenformat der Wissensbasis des Expertensystems und damit auch eine Datenkompression im weitesten Sinne dar, die sich beispielsweise im Hinblick auf den Speicherbedarf der erfindungsgemäßen Vorrichtung sehr vorteilhaft auswirkt. Bei Kenntnis der Architektur der Interferenzmaschine des Expertensystems können die als Ergebnis einer solchen Datenkompression vorliegenden Fehlermeldungen ausgewertet werden und erlauben so Rückschlüsse auf die erfaßten Zustandsdaten und auch auf die zeitliche Abfolge der erfaßten Zustände, also auf die Ereignisketten.

In einer vorteilhaften Variante der erfindungsgemäßen Vorrichtung ist das Expertensystem so programmiert, daß bei der Auswertung der Zustandsdaten eine Klassifizierung nach Fehlertypen erfolgt und daß aufgrund dieser Klassifizierung im folgenden lediglich eine entsprechende Auswahl von Zustandsdaten ausgewertet wird. Eine derartige Klassifizierung ermöglicht eine gezielte und damit schnelle Diagnose vom Fehlerursachen und erweist sich außerdem auch als vorteilhaft im Zusammenhang mit der Erweiterung der Wissensbasis des Expertensystems, also beim "Trainieren" des Expertensystems. Insbesondere wenn mit der erfindungsgemäßen Vorrichtung auch selten auftretende Fehler erkannt und identifiziert werden sollen, ist es sinnvoll, wenn die beim ganz normalen Betrieb des Kraftfahrzeugs kontinuierlich erfaßten Zustandsdaten auch zum Training des Expertensystems verwendet werden. Eine Klassifizierung der Zustandsdaten ermöglicht dann ein gezieltes Training nach bestimmten Fehlerklassen.

In einer besonders benutzerfreundlichen Variante der erfindungsgemäßen Vorrichtung läßt sich der Detaillierungsgrad der Wiedergabe der Fehlermeldungen vorgeben. In der Regel ist es nämlich nicht sinnvoll die gesamte Fehlermeldung, also alle in Frage kommenden Fehlerarten mit den entsprechenden Auftrittswahrscheinlichkeiten, wiederzugeben, sondern lediglich die wahrscheinlichsten Fehlerarten.

Zur Durchführung einer Fehlerdiagnose müssen der erfindungsgemäßen Vorrichtung Zustandsdaten übermittelt werden, wozu sie mit einer oder mehreren geeigneten Schnittstellen ausgestattet ist, so daß sie direkt oder indirekt mit einer im Kraftfahrzeug befindlichen Sensorik verbunden werden kann. Wenn die Sensorik nicht direkt an die erfindungsgemäße Vorrichtung angeschlossen ist, könnte sie beispielsweise an ein Steuergerät angeschlossen sein, das die erfaßten Meßwerte über einen CAN-Bus an andere Steuergeräte weitergibt. Die Zustandsinformationen könnten dann also beispielsweise von dem CAN-Bus abgerufen werden.

Von besonderem Vorteil ist es, wenn die Fehlerdiagnose nicht nur auf einer Auswertung von physikalischen Zustandsdaten beruht sondern auch auf Zustandsdaten von Applikationen. Derartige Zustandsdaten könnten beispielsweise in Form von Statusmeldungen oder auch in einen Speicher eingeschriebenen Zustandsvariablen abgerufen werden. Die Zustandsdaten einer oder mehrerer Software-Applikationen könnten in besonders vorteilhafter Weise mit von der Sensorik erfaßten Zuständen oder Werten physikalischer Größen verknüpft werden.

Wesentlich für die erfindungsgemäße Vorrichtung ist, daß das Expertensystem der erfindungsgemäßen Vorrichtung an die Elektronik des Kraftfahrzeugs angeschlossen ist, und zwar so, daß die Auswertung der Zustandsdaten im Kraftfahrzeug erfolgt. Insbesondere zur Identifikation von selten auftretenden, exotischen Fehlern erweist es sich allerdings als vorteilhaft, wenn die erfindungsgemäße Vorrichtung zusätzlich auch eine Schnittstelle aufweist, über die Zustands- und Diagnosedaten zu einem externen Kommunikationssystem übertragen werden können, so daß beispielsweise in der Werkstatt eine Ferndiagnose durchgeführt werden kann. Da die erfindungsgemäße Vorrichtung, wie bereits voranstehend erörtert, eine Kompression der insgesamt erfaßten Zustandsdaten vornimmt, müssen für eine derartige Ferndiagnose nur vergleichsweise geringe Datenmengen übertragen werden.

Schließlich sei noch erwähnt, daß im Rahmen der erfindungsgemäßen Vorrichtung auch Expertensysteme mit einer Wissensbasis eingesetzt werden können, von der neben Fehlermeldungen auch weiterführende Informationen, beispielsweise eine technische Erläuterung des Problems, abgerufen werden können. Außerdem könnte das Expertensystem in vorteilhafter Weise so programmiert sein, daß beim Abrufen bestimmter Fehlermeldungen auch alternative Betriebsmodi für die von dem aufgetretenen Fehler betroffenen Fahrzeugkomponenten aktiviert werden. So könnte das Expertensystem beispielsweise ein Abschalten gewisser Verbraucher im Kraftfahrzeug veranlassen, wenn der Ladezustand der Fahrzeugbatterie unter einem vorgegebenen Wert absinkt.

### Zeichnung

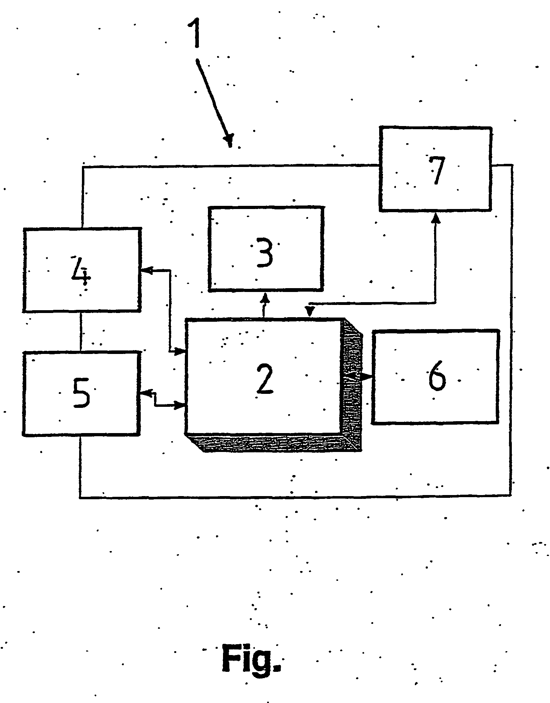

Die einzige Figur zeigt das Blockschema eines Fahrerinformationssystems mit einer erfindungsgemäßen Vorrichtung als Kernkomponente.

### Beschreibung eines Ausführungsbeispiels

Die in der einzigen Figur dargestellte Rechnerplattform eines Fahrerinformationssystems 1 umfaßt eine erfindungsgemäße Vorrichtung zur Diagnose von beim Betrieb eines Kraftfahrzeugs auftretenden Fehlern, deren Kemkomponente Auswertemittel 2 sind. Diesen Auswertemitteln 2 werden Zustandsdaten von unterschiedlichen Fahrzeugkomponenten übermittelt. Durch Auswertung dieser Zustandsdaten werden Fehler erkannt und identifiziert, um dann entsprechende Fehlermeldungen von einer Informationsbasis abzurufen, die Teil der hier dargestellten Auswertemittel 2 ist. Die Fehlermeldungen werden dann mit Hilfe einer an die Auswertemittel 2 angeschlossenen Ausgabeeinheit 3 wiedergegeben.

Erfindungsgemäß umfassen die Auswertemittel 2 ein Expertensystem, wobei das Expertensystem jeder konkreten Konstellation von Zustandsdaten mindestens eine Fehlerart mit der entsprechenden Fehlerwahrscheinlichkeit als Fehlermeldung zuordnet, und das Expertensystem an die Elektronik des Kraftfahrzeugs angeschlossen ist, so daß die Auswertung der Zustandsdaten im Kraftfahrzeug erfolgt.

Bei den Auswertemitteln 2 kann es sich um ein Software-Modul oder auch um eine dezidierte Software/Hardwarekomponente handeln. Die Ausgabeeinheit 3 könnte in Form eines Displays, TTS oder in irgendeiner anderen geeigneten Form realisiert sein.

Die für die Fehlererkennung erforderlichen Zustandsdaten werden den Auswertemitteln 2 über verschiedene Schnittstellen zugeleitet. So verfügen die Auswertemittel 2 über eine Anbindung an eine oder mehrere CAN-Busse 4 und eine Anbindung zu einer weiteren, externen Sensorik 5. Daneben können Statusinformationen von unterschiedlichen Applikationen 6 als Input für die Auswertemittel 2 herangezogen werden. Diese Daten bilden die Basis für die Erkennung und Diagnose von Fehlfunktionen. Diese erfolgt in der Interferenzmaschine des Expertensystems, die das chronologische Auftreten der unterschiedlichen Ereignisse an den CAN-Bussen 4, an der Sensorik 5 und den Applikationen 6 berücksichtigt. Das Ergebnis der Datenauswertung wird dem Fahrzeugbenutzer über die Ausgabeeinheit 3 als Fehlermeldung präsentiert. Der Detaillierungsgrad der Fehlermeldung ist entweder vom Hersteller voreingestellt oder kann auch individuell gewählt werden. Im hier dargestellten Ausführungsbeispiel verfügt die erfindungsgemäße Vorrichtung außerdem auch über eine Schnittstelle zu einem Ferndiagnosesystem 7, über die dem Ferndiagnosesystem die vorverarbeiteten Zustandsdaten in Form von Fehlermeldungen und gegebenenfalls auch Zustandsdaten, also Rohinformationen, zur Verfügung gestellt werden können. Diese Schnittstelle kann beispielsweise auch zur Fehlerdiagnose in der Werkstatt genutzt werden.

Werden die Zustandsdaten für bestimmte, beispielsweise selten auftretende Fehlertypen aufgezeichnet, so können diese im Weiteren für das "Trainieren" des Expertensystems, d. h. zur Erweiterung der Wissensbasis des Expertensystems, genutzt werden. Zu diesem Zweck kann z. B. über eine Klassifizierung der erfaßten Fehler eine Auswahl der für spätere Auswertungen aufzuzeichnenden Zustandsdaten getroffen werden, wobei die Fehlerklassen im Expertensystem abgelegt sein müssen.

Abschließend sei nochmals darauf hingewiesen, daß mit der erfindungsgemäßen Vorrichtung ein On-Board-Diagnosesystem zur Verfügung gestellt wird, mit dem sich "kritische" Betriebszustände unter Nutzung von künstlicher Intelligenz, leistungsfähigen Fahrzeugrechnem und Sensorik automatisch erkennen lassen, nämlich durch Verknüpfung eines wissensbasierten Systems mit zusätzlicher Sensorik. Außerdem liefert die erfindungsgemäße Vorrichtung dem Fahrzeugbenutzer detaillierte aber einfach verständliche Informationen über den Betriebszustand des Kraftfahrzeugs, die auf einer Vorverarbeitung und Aufbereitung der erfaßten "Rohdaten" beruhen. Die erfindungsgemäße Vorrichtung ermöglicht ferner eine kontinuierliche Überwachung im Hintergrund und auch die Erfassung von selten auftretenden Fehlern. Die durch die erfindungsgemäße Vorrichtung geleistete Datenkompression ermöglicht eine Datensammlung über einen längeren Zeitraum bei relativ geringem Speicherbedarf. Die auf diese Weise vorverarbeiteten Rohdaten können auch zu weiteren Diagnosezwecken beispielsweise in der Werkstatt verwendet werden. Bei Ferndiagnose muß nun nicht mehr eine Vielzahl von Parametern übertragen werden sondern nur noch die generierten Fehlermeldungen. Bei Kenntnis der Architektur der Interferenzmaschine des Expertensystems können durch Auswertung der Fehlermeldungen nämlich Rückschlüsse auf die Sensorstati und Ereignisketten gezogen werden.

## Patentansprüche

1. Vorrichtung zur Diagnose von beim Betrieb eines Kraftfahrzeugs auftretenden Fehlern,
- mit mindestens einer Schnittstelle zum Empfangen von Zustandsdaten von unterschiedlichen Fahrzeugkomponenten,
- mit Auswertemitteln (2) zum Erkennen von Fehlern anhand der Zustandsdaten und zum Abrufen entsprechender Fehlermeldungen von einer Informationsbasis und
- mit einer Ausgabeeinheit (3) zur Wiedergabe der Fehlermeldungen,
**dadurch gekennzeichnet, daß** die Auswertemittel (2) ein Expertensystem umfassen, wobei das Expertensystem jeder konkreten Konstellation von Zustandsdaten mindestens eine Fehlerart mit der entsprechenden Fehlerwahrscheinlichkeit als Fehlermeldung zuordnet, und daß das Expertensystem an die Elektronik des Kraftfahrzeugs angeschlossen ist, so daß die Auswertung der Zustandsdaten im Kraftfahrzeug erfolgt.

2. Vorrichtung nach Anspruch 1, **dadurch gekennzeichnet, daß** das Expertensystem so programmiert ist, daß bei der Auswertung der Zustandsdaten eine Klassifizierung nach Fehlertypen erfolgt und daß aufgrund dieser Klassifizierung im Folgenden lediglich eine entsprechende Auswahl von Zustandsdaten ausgewertet wird.

3. Vorrichtung nach einem der Ansprüche 1 oder 2, **dadurch gekennzeichnet, daß** das Expertensystem so programmiert ist, daß die während des Betriebs des Kraftfahrzeugs erfaßten Zustandsdaten auch zum Trainieren des Expertensystems genutzt werden können.

4. Vorrichtung nach einem der Ansprüche 1 bis 3, **dadurch gekennzeichnet, daß** Eingabemittel vorgesehen sind und daß diese Eingabemittel Mittel zur Vorgabe des Detaillierungsgrads der Wiedergabe der Fehlermeldungen umfassen, so daß lediglich die Fehlerarten mit zugehöriger Fehlerwahrscheinlichkeit einer Fehlermeldung wiedergegeben werden, deren Fehlerwahrscheinlichkeiten über einem vorgebbaren Wert liegen.

5. Vorrichtung nach einem der Ansprüche 1 bis 4, **dadurch gekennzeichnet, daß** mindestens eine Schnittstelle für einen CAN-Bus (4) der Elektronik des Kraftfahrzeugs vorgesehen ist.

6. Vorrichtung nach einem der Ansprüche 1 bis 5, **dadurch gekennzeichnet, daß** mindestens eine Schnittstelle für eine im Kraftfahrzeug befindliche Sensorik (5) vorgesehen ist.

7. Vorrichtung nach einem der Ansprüche 1 bis 6, **dadurch gekennzeichnet, daß** mindestens eine Schnittstelle für Applikationen (6) mit Diagnose-l/F vorgesehen ist.

8. Vorrichtung nach einem der Ansprüche 1 bis 7, **dadurch gekennzeichnet, daß** mindestens eine Schnittstelle zu einem Kommunikationssystem zur Ferndiagnose (7) vorgesehen ist.

9. Vorrichtung nach einem der Ansprüche 1 bis 8, **dadurch gekennzeichnet, daß** die Informationsbasis Teil einer Wissensbasis ist, von der neben Fehlermeldungen auch weiterführende Informationen abrufbar sind.

10. Vorrichtung nach einem der Ansprüche 1 bis 9, **dadurch gekennzeichnet, daß** das Expertensystem so programmiert ist, daß beim Abrufen bestimmter Fehlermeldungen alternative Betriebsmodi für die von dem aufgetretenen Fehler betroffenen Fahrzeugkomponenten aktiviert werden.

## Revendications

1. Dispositif de diagnostic de défauts pendant le fonctionnement d'un véhicule automobile, comprenant :
- au moins une interface pour recevoir des données d'état de différents composants du véhicule,
- des moyens d'exploitation (2) pour identifier des défauts à l'aide des données d'état et pour appeler des messages de défaut correspondants à partir d'une base d'informations, et
- une unité de sortie (3) pour reproduire les messages de défaut,
**caractérisé en ce que**
les moyens d'exploitation (2) comprennent un système expert qui associe à chaque constellation concrète de données d'état au moins un type de défaut avec la probabilité de défaut correspondante comme message de défaut, et le système expert est raccordé à l'électronique du véhicule automobile, de sorte que l'évaluation des données d'état se fasse dans le véhicule automobile.

2. Dispositif selon la revendication 1,
**caractérisé en ce que**
le système expert est programmé pour effectuer lors de l'exploitation des données d'état, une classification selon les types de défaut et ensuite effectuer seulement sur la base de cette classification, une sélection correspondante de données d'état

3. Dispositif selon l'une quelconque des revendications 1 ou 2,
**caractérisé en ce que**
le système expert est programmé pour utiliser les données d'état saisies pendant le fonctionnement du véhicule automobile également pour l'apprentissage du système expert.

4. Dispositif selon l'une quelconque des revendications 1 à 3,
**caractérisé en ce que**
des moyens d'entrée sont prévus avec des moyens pour prédéterminer le degré de détail de la restitution des messages de défaut, pour ne restituer que les seuls types de défaut dont la probabilité de défaut associée d'un message de défaut est supérieure à une valeur prédéterminée.

5. Dispositif selon l'une quelconque des revendications 1 à 4,
**caractérisé par**
au moins une interface pour un bus CAN (4) de l'électronique du véhicule automobile.

6. Dispositif selon l'une quelconque des revendications 1 à 5,
**caractérisé par**
au moins une interface pour un ensemble de capteurs (5) présente dans le véhicule automobile.

7. Dispositif selon l'une quelconque des revendications 1 à 6,
**caractérisé par**
au moins une interface pour des applications (6) avec diagnostic I/F.

8. Dispositif selon l'une quelconque des revendications 1 à 7,
**caractérisé par**
au moins une interface vers un système de communication pour un diagnostic à distance (7).

9. Dispositif selon l'une quelconque des revendications 1 à 8,
**caractérisé en ce que**
la base d'informations fait partie d'une base de savoir qui en plus des messages de défauts peut sur appel fournir des informations plus détaillées

10. Dispositif selon l'une quelconque des revendications 1 à 9,
**caractérisé en ce que**
le système expert est programmé pour activer lors de l'appel de certains messages de défaut, des modes de fonctionnement alternatifs pour les composants du véhicule concernés par les défauts apparus.

## Claims

1. Device for diagnosing faults which occur during the operation of a motor vehicle,
- having at least one interface for receiving state data from different vehicle components,
- having evaluation means (2) for detecting faults by reference to the state data and for calling corresponding fault messages from an information base, and
- having an output unit (3) for playing back the fault messages,
**characterized in that** the evaluation means (2) comprise an expert system, with the expert system assigning at least one type of fault to each specific configuration of state data with the corresponding fault probability as a fault message, and **in that** the expert system is connected to the electronics of the motor vehicle so that evaluation of the state data takes place in the motor vehicle.

2. Device according to Claim 1, **characterized in that** the expert system is programmed in such a way that when the state data is evaluated classification is carried out according to fault types, and **in that** only one corresponding selection of state data is subsequently evaluated on the basis of this classification.

3. Device according to one of Claims 1 or 2, **characterized in that** the expert system is programmed in such a way that the state data which is sensed during the operation of the motor vehicle can also be used for training the expert system.

4. Device according to one of Claims 1 to 3, **characterized in that** input means are provided, and **in that** these input means comprise means for predefining the degree of detailing of the playback of the fault messages so that only the types of fault with an associated fault probability of a fault message whose fault probabilities are above a predefineable value are played back.

5. Device according to one of Claims 1 to 4, **characterized in that** at least one interface is provided for a CAN bus (4) of the electronics of the motor vehicle.

6. Device according to one of Claims 1 to 5, **characterized in that** at least one interface is provided for a sensor system (5) which is located in the motor vehicle.

7. Device according to one of Claims 1 to 6, **characterized in that** at least one interface is provided for applications (6) with diagnostic I/F.

8. Device according to one of Claims 1 to 7, **characterized in that** at least one interface with a communications system for remote diagnostics (7) is provided.

9. Device according to one of Claims 1 to 8, **characterized in that** the information base is part of a knowledge base from which both fault messages and more wide ranging information can be called.

10. Device according to one of Claims 1 to 9, **characterized in that** the expert system is programmed in such a way that when certain fault messages are called alternative operating modes for the vehicle components which are affected by the fault which has occurred are activated.
